# EUROPEAN PATENT APPLICATION

(11) **EP 2 613 549 A1**
(43) Date of publication of application: **10.07.2013**
(21) Application number: 12196693.1
(22) Date of filing: 12.12.2012
(51) Int. Cl.: H04N 21/422, G06F 17/30, H04N 21/4725, H04N 21/4728, H04N 21/8405

(54) **Display apparatus, remote control apparatus, and searching methods therof**

(30) Priority: 09.01.2012 KR 20120002663
(71) Applicant: Samsung Electronics Co., Ltd., Gyeonggi-do 443-742 (KR)
(72) Inventor: Yun, Sang-un, Seoul (KR); Sung, Jun-ho, Seoul (KR)
(74) Representative: Bray, Richard Anthony

(57) **Abstract**

A display apparatus is provided. The display apparatus includes a display unit configured to display an image frame of a content, an interface unit configured to receive a user command for selecting an object, a selection unit configured to select the object corresponding to the user command as a search target, in a plurality of image frames of the content, a communication unit configured to communicate with an external search server, and a control unit configured to transmit the selected object as the search target to the external search server, receive a searching result for the selected object from the external search server, and display the searching result.

## Description

### CROSS-REFERENCE TO RELATED APPLICATION

This application claims priority from Korean Patent Application No. 10-2012-0002663, filed on January 9, 2012, in the Korean Intellectual Property Office, the disclosure of which is incorporated herein by reference in its entirety.

### BACKGROUND

### 1. Field

Apparatuses and methods consistent with exemplary embodiments relate to a display apparatus, a remote control apparatus, and searching methods thereof. More particularly, embodiments relate to a display apparatus, a remote control apparatus, and searching methods capable of performing searching through an external search server.

### 2. Description of the Related Art

Various display apparatuses, i.e., televisions (TVs), portable phones, personal computers (PCs), laptop PCs, personal digital assistants (PDAs), etc. have been widely used in the home. With increasing demand on the display apparatuses, display apparatuses capable of providing various functions have been developed. In recent years, products may connect a display apparatus to Internet networks and provide services, i.e., web surfing and searching.

When a viewer wants to obtain information for characters or sponsored products while watching contents through the display apparatuses, the viewer has to search the information using a separate web search screen. Therefore, it is impossible for the viewer to search the information when the viewer does not know the keywords for the characters and the sponsored products.

### SUMMARY

According to the present invention there is provided an apparatus and method as set forth in the appended claims. Other features of the invention will be apparent from the dependent claims, and the description which follows.

One or more exemplary embodiments provide to a display apparatus, a remote control apparatus, and searching methods capable of easily and intuitively performing searching by a viewer who is watching contents and searching information when the viewer does not know the keywords for the information to be searched.

According to an aspect of an exemplary embodiment, there is provided a searching method of a display apparatus. The method may include: displaying an image frame of an content; selecting an object, corresponding to a user command for selecting the object in the image frame as a search target, in response to the received user command; transmitting the selected object as the search target to a search server; and receiving and displaying a searching result for the selected object from the search server.

The selecting an objects as a search target may include capturing the image frame of the content being displayed, at a point of time when the user command is received, among a plurality of image frames of the content; determining a search category corresponding to the user command; and detecting a plurality of objects belonging to the determined search category in the captured image frame and selecting the object as the search target.

The user command may be a touch input of a preset pattern and the determining the search category may include analyzing the pattern of the touch input and determining the search category corresponding to the pattern of the touch input.

The detecting the plurality of objects and selecting the object as the search target may include transmitting an image frame representing the detected objects to a remote control apparatus, which controls the display apparatus; and selecting the selected object as the search target in response to a selection of one of the detected objects is on the remote control apparatus.

The searching method of a display apparatus may further include extracting keyword information related to a search category from metadata of the content. The transmitting the selected object as the search target to the search server may include transmitting the selected object as the search target and the extracted keyword information to the search server.

The transmitting an object as a search target may include capturing the image frame of the content, which is being displayed, at a point of time when the user command is received, among a plurality of image frames of the content; transmitting the captured image frame to a remote control apparatus, which controls the display apparatus; and selecting the selected object as the search target in response to a selection of the object by the remote control apparatus.

The searching method of a display apparatus may further include receiving information for a search category determined on the remote control apparatus; and extracting keyword information related to the received search category from metadata of the content using information for the received search category. The transmitting the selected object as the search target to the search server may include transmitting the selected object as the search target and the extracted keyword information to the search server.

According to another aspect of an exemplary embodiment, there is provided a search method of a remote control apparatus which controls a display apparatus. The method may include: receiving a user command for selecting an object in an image frame being displaying in the display apparatus; and transmitting the user command to the display apparatus to display a searching result for the selected object.

The searching method of a remote control apparatus may include receiving an image frame representing objects detected according to the user command, which is captured at a point of time when the user command is transmitted, from the display apparatus; displaying the received image frame; and transmitting an object selection command for selecting the selected object as a search target to the display apparatus, in response to a selection of one of the objects represented on the displayed image frame.

Alternatively, the searching method of the remote control apparatus may further include receiving an image frame captured at a point of time when the user command is transmitted; displaying the captured image frame; selecting an object in the received image frame corresponding to the user command; and transmitting an object selection command for selecting the selected object as the search target to the display apparatus.

The selecting the selected object may include determining a search category corresponding to the user command; detecting a plurality of objects belonging to the determined search category in the displayed image frame; and selecting one of the detected objects.

The user command may be a touch input of a preset pattern. The determining the search category may include analyzing the pattern of the touch input and determining the search category corresponding to the pattern of the touch input.

According to another aspect of an exemplary embodiment, there is provided a display apparatus. The display apparatus may include: a display unit configured to display an image frame of a content; an interface unit configured to receive a user command for selecting an object; a selection unit configured to select the object corresponding to the user command as a search target, in a plurality of image frames of the content; a communication unit configured to communicate with an external search server; and a control unit configured to transmit the selected object as the search target to the external search server, receive a searching result for the selected object from the external search server, and display the searching result.

The selection unit may include a capture unit configured to capture the image frame of the content being displayed, at a point of time when the user command is received, among the image frames of the content; a category determination unit configured to a search category corresponding to the user command; and an object selection unit configured to detect a plurality of objects belonging to the determined search category in the captured image frame and select the object as the search target.

The user command may be a touch input of a preset pattern. The category determination unit may analyze the pattern of the touch pattern and determine the search category corresponding to the pattern of the touch input.

The interface unit may transmit the image frame representing the detected objects to a remote control apparatus, which controls the display apparatus. The object selection unit may select the selected one as the search target in response to a selection of one of the detected objects on the remote control apparatus.

The display apparatus may further include a keyword extraction unit configured to extract keyword information related to a search category from metadata of the content. The control unit may control the communication unit to transmit the selected object as the search target and the extracted keyword information to the external search server.

The selection unit may include a capturing unit configured to capture the image frame of the content being displayed, at a point of time when the user command is received, among a plurality of image frames of the content; and an object selection unit configured to select the selected object as the search target when the captured image frame is transmitted to a remote control apparatus which control the display apparatus and the object is selected on the remote control apparatus.

The display apparatus may further include a keyword extraction unit configured to extract the keyword information related to the search category from metadata of the content using the received information for the search category, in response to the received information for the search category determined on the remote control apparatus. The control unit may control the selected object as the search target and the extracted keyword information to be transmitted to the external search server.

According to another aspect of an exemplary embodiment, there is provided a remote control apparatus which controls a display apparatus. The remote control apparatus may include: an input unit configured to receive a user command for selecting an object in an image frame being displayed in the display apparatus; an interface unit configured to communicate with the display apparatus; and a control unit configured to control the interface unit to transmit the user command to the display apparatus, thereby displaying a searching result for the selected object.

The remote control apparatus may further include a display unit. The interface unit may receive an image frame representing objects detected according to the user command from the display apparatus, which is captured at a point of time when the user command is transmitted, from the display apparatus and the control unit may control an object selection command for selecting the selected object as the search target to be transmitted to the display apparatus, when the received image frame is displayed and one of the objects represented on the displayed image frame is selected.

Alternatively, the remote control apparatus may further include a display apparatus. The interface unit may receive an image frame, which is captured at the point of time when the user command is transmitted, from the display apparatus and the control unit may control the captured image frame to be displayed, an object corresponding to the user command in the received image frame to be selected, and an object selection command for selecting the selected object as the search target, to be transmitted to the display apparatus.

The control unit may determine a search category corresponding to the user command, detects objects belonging to the determined search category in the received image frame, and selects one of the detected objects.

The user command may be a touch input of a preset pattern and the control unit may analyze the pattern of the touch input and determine the search category corresponding to the pattern of the touch input.

According to another aspect of an exemplary embodiment, there is provided a display apparatus. The display apparatus may include: a display unit configured to display an image frame of a content; an interface unit configured to receive a user command for selecting an object; a selection unit configured to select the object corresponding to the user command as a search target, in a plurality of image frames of the content; a communication unit configured to communicate with a search server; a control unit configured to transmit the selected object as the search target to the search server, receive a searching result for the selected object from the external search server, and display the searching result; and a keyword extraction unit configured to extract keyword information related to a search category from metadata of the content.

According to the above-described various exemplary embodiments, it is possible for a viewer to easily intuitively perform searching while watching contents and perform searching using image frames when the viewer does not know the keywords.

### BRIEF DESCRIPTION OF THE DRAWING FIGURES

The above and/or other aspects will be more apparent by describing in detail exemplary embodiments, with reference to the accompanying drawings, in which:
FIG. 1 is a schematic diagram illustrating a configuration of a search system according to an exemplary embodiment;
FIG. 2 is a block diagram illustrating a configuration of a display apparatus according to an exemplary embodiment;
FIG. 3 is a detailed block diagram illustrating a configuration of a selection unit according to an exemplary embodiment;
FIG. 4 is a detailed block diagram illustrating a configuration of a selection unit according to another exemplary embodiment;
FIG. 5 is a block diagram illustrating a configuration of a display apparatus according to another exemplary embodiment;
FIG. 6 is a block diagram illustrating a configuration of a remote control apparatus according to an exemplary embodiment;
FIG. 7 is a block diagram illustrating a configuration of a remote control apparatus according to another exemplary embodiment;
FIG. 8 is a view explaining a procedure of selecting an object as a search target according to an exemplary embodiment;
FIG. 9 is a view explaining a procedure of selecting an object as a search target according to another exemplary embodiment;
FIG. 10 is a flowchart illustrating a search method of a display apparatus according to an exemplary embodiment;
FIG. 11 is a flowchart illustrating a search method of a remote control apparatus according to an exemplary embodiment;
FIG. 12 is a flowchart illustrating a search method of a remote control apparatus according to another exemplary embodiment; and
FIG. 13 is a flowchart illustrating a search method of a remote control apparatus according to another exemplary embodiment.

### DETAILED DESCRIPTION OF THE EXEMPLARY EMBODIMENTS

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

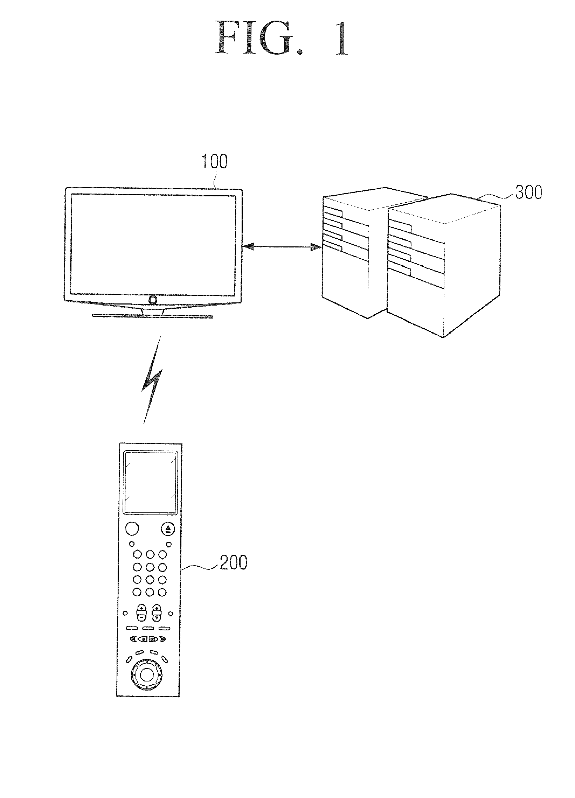

FIG. 1 is a schematic diagram illustrating a configuration of a search system according to an exemplary embodiment.

Referring to FIG. 1, the search system includes a display apparatus 100, a remote control apparatus 200, and a search server 300.

The display apparatus 100 receives contents and displays the contents. The display apparatus 100 may receive contents from a broadcasting station, which transmits broadcasting program contents using a broadcasting network, or a web server, which transmits content files using the Internet and display the contents. Alternatively, the display apparatus may receive contents from a recording medium reproducing apparatus embedded therein or connected thereto and display the received contents. The recording medium reproducing apparatus includes an apparatus configured to reproduce contents stored in various types of recording media, i.e., a digital versatile disc (DVD), a hard disc, a blue-ray disc, a memory card, or a universal serial bus (USB) memory.

If a viewer wants to search information for objects, i.e., persons, places, or articles included in image contents being displayed in the display apparatus 100, the viewer may input a user command through the remote control apparatus 200. According to the user command, the display apparatus 100 may select the object in the image frames as a search target. The display apparatus 100 transmits the selected object as the search target to the search server 300. The search server 300 performs searching for the selected object. The display apparatus 100 may receive a search result from the search server 300 and display the received search result.

The searching result received from the search server 300 may be displayed in a portion of a display screen of the display apparatus 100. When a display screen is included in the remote control apparatus 200, the search result received from the search server 300 may be displayed through the display screen of the remote control apparatus 200.

Metadata for a corresponding content is included in the contents being displayed in the display apparatus 100. The display apparatus 100 may extract keyword information from the metadata and transmit the extracted keyword information to the search server 300, together with the selected object as a search target.

When the search server 300 performs searching for the selected object as a search target, the search server 300 may simultaneously use the keyword information extracted from the metadata so that search accuracy may be improved.

The display apparatus 100 and the remote control apparatus 200 may communicate with each other through various wireless communication techniques, i.e., wireless fidelity (Wi-fi), Bluetooth, Infrared Data Association (IRDA), radio frequency (RF), Institute of Electrical and Electronics Engineers (IEEE) 802.11, wireless local area network (WLAN), high-rate wireless personal area network (HR WPAN), ultra wide band (UWB), or low-rate wireless personal area network (LR WPAN). The display apparatus 100 and the search server 200 may communicate with each other through communication networks, i.e., the Internet.

A portion of the configuration and an operation in the embodiments may be performed in the display apparatus 100 or in the remote control apparatus 200. Specifically, a process of determining a search category and a process of detecting objects in image frames may be performed in one of the display apparatus 100 and the remote control apparatus 200. Therefore, according to exemplary embodiments, detailed configurations and operations of the apparatuses may be different. According to each of the exemplary embodiments, description of the detailed configurations and operations of the display apparatus 100 and the remote control apparatus 200 will be made with respect to a corresponding portion of each exemplary embodiment.

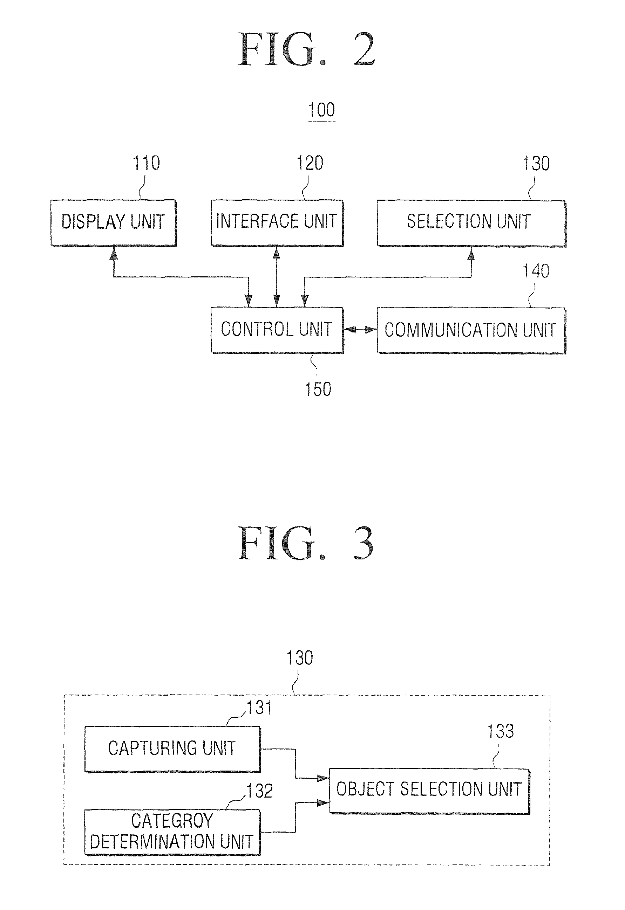

FIG. 2 is a block diagram illustrating a configuration of a display apparatus according to an exemplary embodiment.

Referring to FIG. 2, the display apparatus 100 includes a display unit 110, an interface unit 120, a selection unit 130, a communication unit 140, and a control unit 150. The display apparatus 100 may be implemented with various apparatus including a display unit, i.e., a TV, a portable phone, a PDA, a laptop PC, a monitor, a tablet PC, an electronic book, an electronic frame, or a kiosk.

The display unit 110 displays contents. Specifically, the display unit 110 may display image frames of the contents and provide the image frames to a viewer. The display unit 110 may be implemented with various devices, i.e., a cathode ray tube (CRT), a liquid crystal display (LCD), or a plasma display panel (PDP).

The interface unit 120 receives a user command. In other words, the interface unit 120 may receive the user command for selecting an object input through the remote control apparatus 200. Specifically, the interface unit 120 may communicate with a selection unit (130 of FIG. 3) of the remote control apparatus 200 to receive the user command. The interface unit 120 may communicate with the selection unit 130 through the various wireless communication techniques as described above.

The selection unit 130 selects an object in the image frame displayed in the display unit 130 corresponding to the user command received in the user interface unit 120 as a search target. The selection unit 130 may have different detailed configurations according to exemplary embodiments. Thus, the detailed configuration of the selection unit 130 for each exemplary embodiment will be described.

### [First Embodiment]

FIG. 3 is a block diagram illustrating a detailed configuration of a selection unit according to a first exemplary embodiment.

Referring to FIG. 3, the selection unit 130 includes a capturing unit 131, a category determination unit 132, and an object selection unit 133.

The capturing unit 131 captures an image frame being displayed in the display unit 110. When the interface unit 120 receives a user command, the capturing unit 131 captures an image frame being displayed at a point of time when the user command is received, among the image frames of the content.

The category determination unit 132 determines a search category corresponding to the user command. The user command received from the remote control apparatus 200 may be a touch input of a preset pattern. The category determination unit 132 may analyze the pattern of the touch input and determine a search category corresponding to the pattern of the touch input.

For example, a kind of a search category may be set as a person, a place, and an article. When a pattern of the touch input corresponding to the person is set as a circle, a pattern of the touch input corresponding to the place is set as a triangle, and a pattern of the touch input corresponding to the article is set as a straight line. If a user inputs a touch pattern corresponding to a circle, the category determination unit 132 determines the search category as the person. Alternatively, the user inputs the touch pattern corresponding to a straight line, the category determination unit 132 may determine the search category as the article.

The search category and the pattern of the touch input thereto may be set and stored and may be changed by the user, respectively.

The object selection unit 133 detects objects corresponding to the search category determined in the category determination unit 132 from the image frame captured in the capturing unit 131 and selects the detected objects as the search target.

Various methods may be used to detect the objects in the captured image frame. For example, there are neural networks, convolutional neural networks, Hugher degree polynomial classifiers, a probability-based object recognition method, a feature-point extraction-based object recognition, a hierarchy structure method, an adaptive boosting (Adaboost)-based recognition capable of recognizing objects in real-time, a three-dimensional (3D) geometric model-based object recognition method, a Hough transform based-object recognition method to, etc., as an objection recognition method.

When the real-time objection recognition method is not used, a pretreatment process of discriminating a portion regarded as a feature of each object from an image for each kinds of objections, classifying the discriminated portions into similar portions, extracting and learning the feature of the similar portions is necessary.

Then, a feature point for an image frame for detecting objects is extracted, image-dividing for detecting an area of an object is performed, and position information and direction information of the feature point are also extracted in the feature-point extraction process. Various algorithms may be used in the feature-point extraction process, the learning process, and the image dividing process. For example, a Kadir & Brady method, a scale invariant feature transform (SIFT) algorithm, etc. may be used in the feature-point extraction process, and a J-segment algorithm, a Watershed algorithm, etc. may be used to divide an image. An AdaBoost algorithm may be used as a learning algorithm. Meanwhile, the above-described methods are widely well-known techniques. Thus, detailed description thereof will be described.

Further, the object selection unit 133 may display the detected objects on an image frame to divide the detected objects. For example, an area including the detected objects may be represented as a rectangular shape or the detected objects themselves may be represented to be distinguished from the other portions.

In addition, when one of the detected objects is selected on the remote control apparatus 200, the object selection unit 130 may select the selected one object as the search target. The interface unit 120 may transmit the image frame representing the detected objects to the remote control apparatus 200. When any one of the detected objects is selected by the remote control apparatus 200, the object selection unit 130 may receive an object selection command from the remote control apparatus 200 and select the selected object as a search target.

### [Second Embodiment]

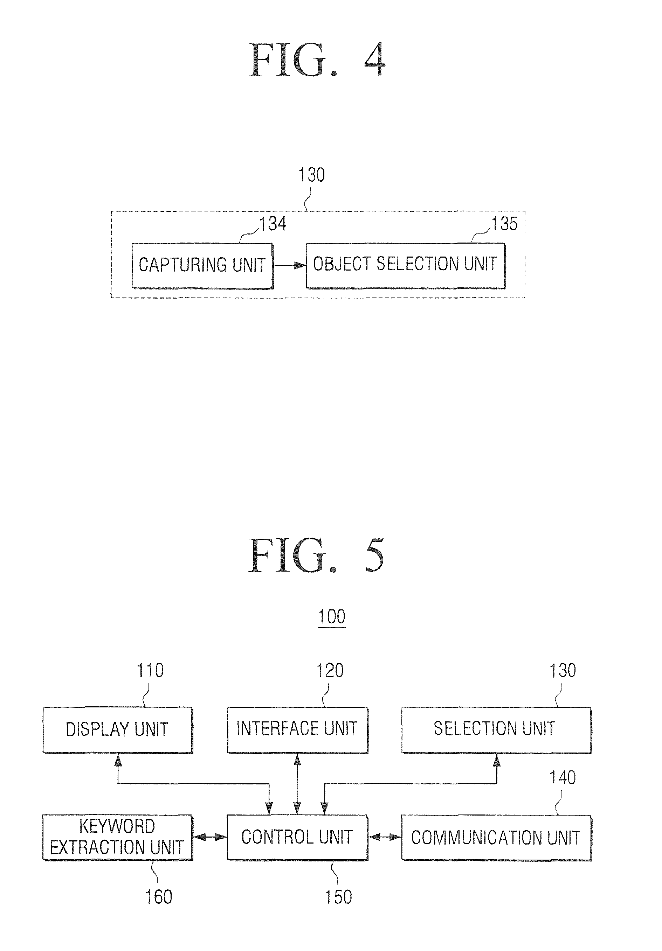

FIG. 4 is a block diagram illustrating a detailed configuration of the selection unit according to another exemplary embodiment.

Referring to FIG. 4, the selection unit 130' includes a capturing unit 134 and an object selection unit 135.

The capturing unit 134 captures an image frame being displayed in the display unit 110. When the interface unit 120 receives the user command, the capturing unit 134 may capture the image frame being displayed at a point of time when the user command is received, among the image frames of the content.

When an object is selected on the remote control apparatus 200, the object selection unit 135 selects the selected object as a search target. Specifically, when the image frames captured in the capturing unit 134 are transmitted to the remote control apparatus 200, the remote control apparatus 200 detects objects corresponding to the user command. When one of the detected objects is selected, the remote control apparatus 200 transmits an object selection command for allowing the selected object to be selected as the search target to the interface unit 120. The object selection unit 135 may select the object selected according to the object selection command as the search target.

The object selection command may have a type such as a pixel coordinate in which a position and an area of the object selected by the remote control apparatus 200 are represented and the object selection unit 135 may select an object on a captured image using the pixel coordinate as the search target. Alternatively, the object selection command may be an image of the selected object itself. In this case, the object selection unit 135 may select a received image of the object itself as the search target.

The communication unit 140 communicates with the external search server 300. As described above, the communication unit 140 may communicate with the search server 300 through a communication network such as the Internet.

The control unit 150 controls the object selected by the selection unit 130 to be transmitted to the search server 300 and a searching result received from the search server 300 to be displayed. In addition, the control unit 150 controls an overall operation of the display apparatus 100. Specifically, the control unit 150 may control the display unit 110, the interface unit 120, the selection unit 130, and the communication unit 140 to perform respective corresponding operations.

FIG. 5 is a block diagram illustrating a configuration of a display apparatus according to another exemplary embodiment.

Referring to FIG. 5, the display apparatus 100' may further include a keyword extraction unit 160, in addition to a display unit 110, an interface unit 120, a selection unit 130, a communication unit 140, and a control unit 150.

The keyword extraction unit 160 extracts keyword information related to a search category from metadata. Specifically, when the display apparatus 100 receives contents, the display apparatus 100 may also receive the metadata including information related to the contents. For example, when the content is a movie, the metadata may include a title, a plot, a genre, a homepage, photographing steps, a producer, a distributor, an investor, casting information, sponsorship information, and photographed places. The keyword extraction unit 160 may extract the keyword information related to the search category from the metadata.

For example, when a viewer is watching the movie "Mission Impossible: Ghost Protocol" and the search category is determined as "a person", the keyword extraction unit 160 may extract the keyword information, i.e., "Tom Cruise", "Jeremy Renner", "Simon Pegg", "Paula Patton", and "Josh Holloway" from the meta data for casting information related to the person.

In addition, when the search category is determined as 'an article', the keyword extraction unit 160 may extract the keyword information, i.e., sponsors, brand names, and model names of sponsored products from the metadata for sponsor information related to the article.

The search category according to the first exemplary embodiment may be determined in the category determination unit 132 of the display apparatus 100 and the keyword extraction unit 160 may extract the keyword information using the search category determined in the category determination unit 132.

Alternatively, according to the second embodiment, the search category is determined in the remote control apparatus 200. Thus, the keyword extraction unit 160 may extract the keyword information using information for the search category received from the remote control apparatus 200.

The communication unit 140 may transmit the keyword information extracted in the keyword extraction unit 160, together with the selected object as the search target in the selection unit 130, to the search server 300.

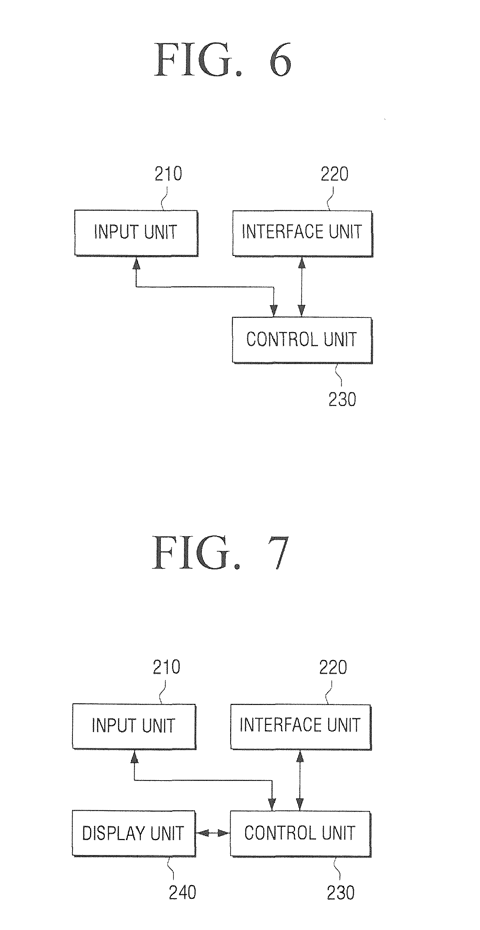

FIG. 6 is a block diagram illustrating a configuration of a remote control apparatus according to an exemplary embodiment.

Referring to 6, the remote control apparatus 200 includes an input unit 210, an interface unit 220, and a control unit 230. The remote control apparatus 200 may be implemented with various devices, i.e., a remote controller, a smart phone, a tablet PC, a laptop PC, or a PDA, which are capable of controlling the display apparatus 100.

The input unit 210 receives a user command. The user command is a user command for selecting an object in an image frame being displayed in the display apparatus 100. The user command may be a touch input of a preset pattern, or a touch input input through a user interface which is capable of selecting the search category.

Alternatively, the input unit 210 may include a touch panel for the touch input. The touch panel may include a panel configured to recognize a contact position of a hand of a person or an object having electrostatic charges using a film which is capable of an electrostatic capacitance, a panel configured to recognize a contact position of a hand of a person or contact positions of other objects using a resistive film, or a panel configured to generate a plurality of rectangular grids on a screen by flowing an invisible infrared ray upward and downward and leftward and right ward and recognize a contact position when a fingertip or the other objects is contact with the grids.

The interface unit 220 communicates with the display apparatus 100. In other words, the interface unit 220 may communicate with the interface unit 120 of the display apparatus 100. The interface unit 220 may transmit the user command input to the input unit 210 and the information for the search category to the display apparatus 100, and receive the captured image frame and the image frame representing the detected objects from the display apparatus 100.

The control unit 230 controls an overall operation of the remote control apparatus 200. Specifically, the control unit 230 may control the input unit 210 and the interface unit 220 to perform respective corresponding operations.

In addition, the control unit 230 controls the interface unit 220 to transmit the user command, input to the input unit 210, to the display apparatus. The control unit 230 may control the user command to be transmitted to the display apparatus 100, an object to be selected in the display apparatus, and a searching result for the selected object to be displayed.

In addition, when the preset pattern of the touch input is input to the input unit 210, the control unit 230 may analyze the pattern of the touch input and determine the search category corresponding to the pattern of the touch input.

FIG. 7 is a block diagram illustrating a configuration of a remote control apparatus according to another exemplary embodiment.

Referring to FIG. 7, the remote control apparatus 200 may further include a display unit 240, in addition to an input unit 210, an interface unit 220, and the control unit 230.

Detailed description for the remote control apparatus 200 will be made for each exemplary embodiment.

### [First Embodiment]

The control unit 230 may control an image frame representing the objects detected according to the user command to be displayed in the display apparatus 100. When one of the objects represented on the image frame is displayed, the object selection command for allowing the selected object to be selected as the search target to be transmitted to the display apparatus 100.

The interface unit 220 may receive the image frame which is captured at a point of time when the user command is transmitted and represents the objects detected according to the user command. The display unit 240 may display the image frame representing the detected objects, which are received from the interface unit 220. One of the objects represented on the image frame being displayed may be selected according to a selection command of a user. The interface unit 220 may transmit the object selection command to the display apparatus 100, so that the display apparatus 100 selects the selected object as the search target.

### [Second Embodiment]

The control unit 230 may control an object, corresponding to the user command in the image frame captured in the display apparatus, to be selected. Theobject selection command, which allows the selected object to be selected as the search target, is transmitted to the display apparatus 100.

The interface unit 220 receives the image frame captured at a point of the time when the user command is received from the display apparatus 100. The display unit 240 may display the captured image frame and the control unit 230 may select the object corresponding to the user command in the received image frame. The interface unit 220 may transmit the object selection command to the display apparatus 100 so that the display apparatus 100 may select the selected object as the search target.

A process of selecting the object corresponding to the user command in the received image frame will be described.

The control unit 230 determines a search category corresponding to the user command for selecting the object input to the input unit 210. When the user command is a touch input of a preset pattern, the control unit 230 may analyze the pattern of the touch input, and determines a search category corresponding to the pattern of the touch input. The detailed description for the determination of the search category has been made in connection with the category determination unit 132 of the FIG. 3. Thus, the detailed description will be omitted.

When the search category is determined, the control unit 230 may detect objects included in the determined category in the received image frame and represent the detected objects on the image frame. The method of detecting and representing the objects has been described in connection with the object selection unit 133 of FIG. 3. Thus, the detailed description will be omitted.

Then, the control unit 230 may select one of the detected objects according to the object selection command of a user.

Although the input unit 210 and the display unit 240 of the remote control apparatus 200' have been described to be separately configured from each other, the input unit 210 and the display unit 240 may be integrally implemented as one configuration. In other words, when the input unit 210 includes a touch panel, the input unit 210 and the display unit 240 may be integrally implemented with a touch screen as one configuration.

The search server 300 receives the selected object as the search target from the display apparatus 100 and performs searching on the selected object. The search server 300 performs the searching according to general methods used in searching in a search site, i.e., Google. The searching methods are obvious in the corresponding technical fields. Thus, detailed description will be omitted.

When the selected object is image data, the search server 300 may perform image searching. The image searching is a searching method which searches a similar image by dividing an image to be searched into specific areas, detecting feature values of pixels included in each pixel such as a color, a chroma, and a luminance of the pixels and positions, and comparing the detected feature values and positions with those of the other images, and searches information, etc., related to the searched image.

In addition, when the search server 300 receives the selected object as the search target and the keyword information, the search server 300 may search the image using the selected object as the search target together with the keyword. Thus, search accuracy may be improved using the keyword information.

For example, it is assumed that while a viewer is watching "Mission impossible: Ghost Protocol", the viewer inputs a user command and select an image for "Jeremy Renner" as an object to obtain information for "Jeremy Renner" among the castings and keywords, i.e., "Tom Cruise", "Jeremy Renner", "Simon Pegg", "Paula Patton", and "Josh Holloway" are extracted as the keyword information. The search server 300 may perform image searching by searching images related to "Tom Cruise", "Jeremy Renner", "Simon Pegg", "Paula Patton", and "Josh Holloway" as the keyword information and then comparing the searched image with the image of "Jeremy Renner" selected as the object. Alternatively, the search server 300 may first perform the image searching, and then perform searching using the keyword information in the image searching result.

Them, when the searching is completed, the search server 300 transmits the searching result to the display apparatus 100.

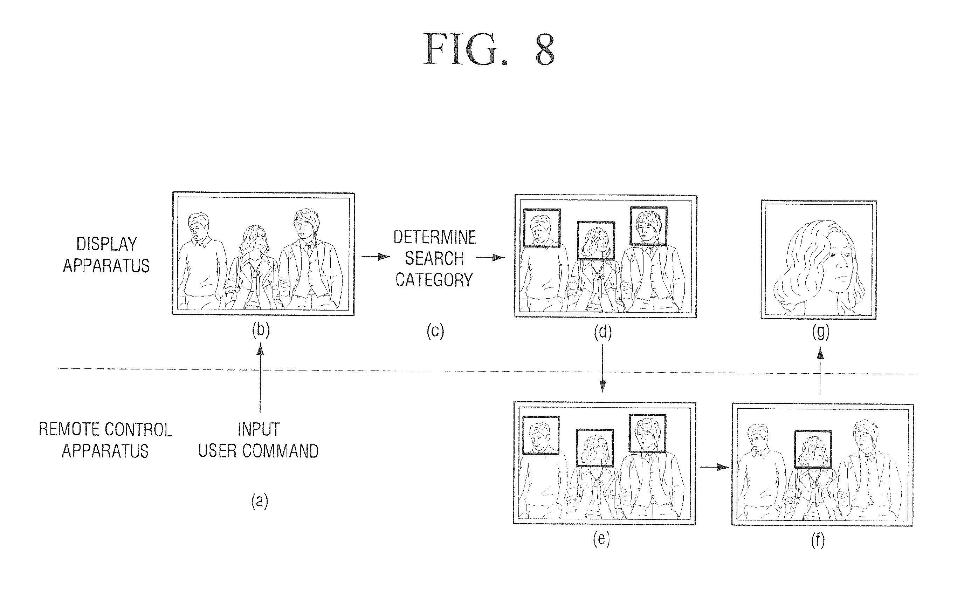

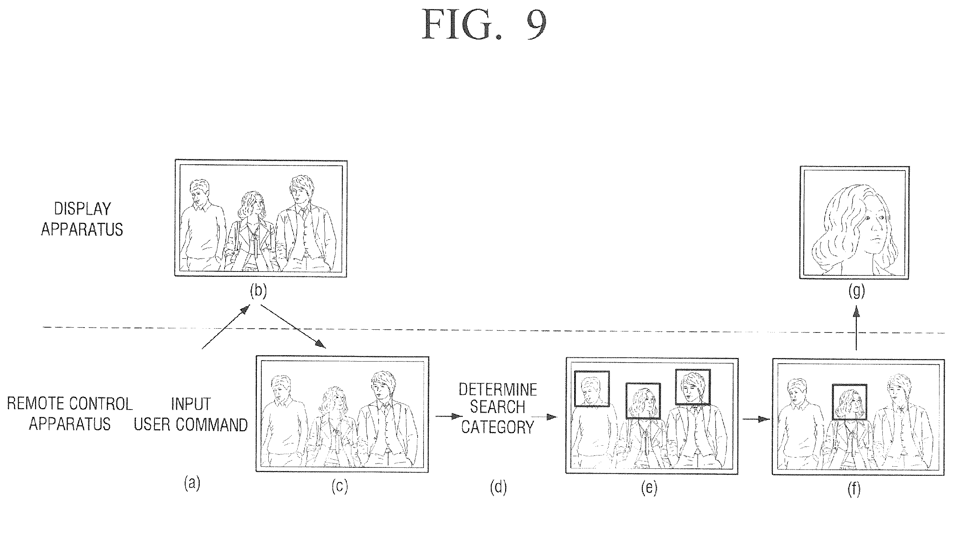

Hereinafter, a process of selecting an object as a search target using FIGS. 8 and 9 will be described for each exemplary embodiment.

FIG. 8 is a view explaining a process of selecting an object as a search target according to an exemplary embodiment.

When a user command is input to the remote control apparatus 200, the remote control apparatus transmits the user command to the display apparatus 100 (a). The display apparatus 100 captures an image frame being displayed at a point of time when the user command is received (b). The display apparatus 100 determines a search category corresponding to the user command (c). Then, the display apparatus 100 detects objects belonging to the search category determined in the captured image frame, display the detected objects, and transmits the image frame representing the detected objects to the remote control apparatus 200 (d). The remote control apparatus 200 receives the image frame representing the received objects and displays the received image frame (e), and receives selection for any one object from the user and transmits an object selection command to the display apparatus 100 (f). The display apparatus 100 selects the object as the search target according to the object selection command (g).

FIG. 9 is a view explaining a process of selecting an object as a search target according to another exemplary embodiment.

When a user command is input to the remote control apparatus 200, the remote control apparatus 200 transmits the user command to the display apparatus 100 (a). The display apparatus 100 captures an image frame being displayed at a point of time when the user command is received and transmits the captured image to the remote control apparatus 200 (b). The remote control apparatus 200 displays the received image frame (c) and determines a search category corresponding to the user command (d). Then, the remote control apparatus 200 detects objects belonging to the search category determined in the image frame and displays the detected objects (e) and receives selection for any one object from the user and transmits an object selection command to the display apparatus 100. The display apparatus 100 selects the selected object as the search target according to the objection selection command (f).

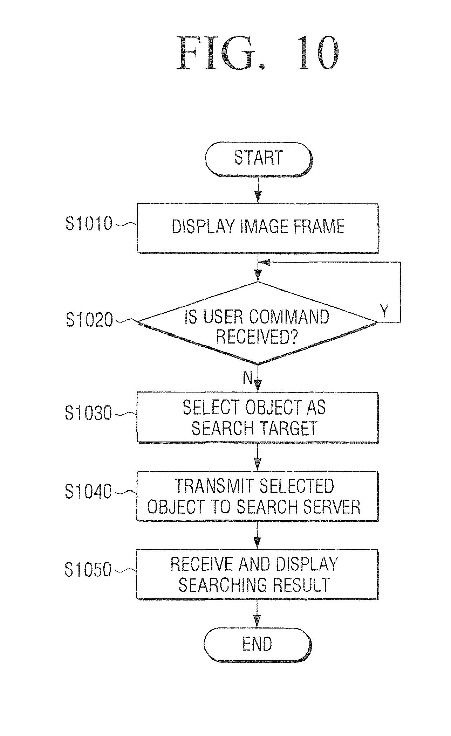

FIG. 10 is a flowchart illustrating a searching method of a display apparatus 100 according to an exemplary embodiment.

A display apparatus displays an image frame (S1010). In other words, the display apparatus displays and provides an image frame of a content to a viewer.

Then, the display apparatus 100 determines whether or not a user command for selection of an object is received (S1020). Here, the user command for selecting an object may be a touch input of a preset pattern input through an input unit of a remote control apparatus.

When the user command for selecting an object is received (S1020-Y), the display apparatus selects an object as a search target (S1030). Specifically, the display apparatus may select an object corresponding to the received user command in the image frame as the search target. A detailed process of selecting the object as the search target (S1030) may be different according to the exemplary embodiments. Thus, the detailed process will be described for each exemplary embodiment.

### [First Embodiment]

The process of selecting the object as a search target (S1030) may include capturing an image frame being displayed at a point of time when the user command is received among the image frames of the contents, determining a search category corresponding to the user commend, and detecting objects belonging to the search category determined in the captured image frame and selecting one of the detected objects as the search target.

The determining a search category may include, when the user command is a touch input of a preset pattern, analyzing the pattern of the touch input and determining the search category corresponding to the pattern of the touch input.

In addition, the detecting objects and selecting one of the detected objects as a search target may include transmitting the image frame representing the detected objects to the remote control apparatus configured to control the display apparatus and. When one of the detected objects is selected on the remote control apparatus, selecting the selected object as the search target.

The searching method of the first embodiment may further include extracting keyword information. Specifically, the display apparatus may extract keyword information related to the search category from metadata of the content.

### [Second Embodiment]

The selecting an object as a search target (S1030) may include capturing an image frame being displayed at a point of time when the user command is received among the image frames of the contents, transmitting the captured image frame to the remote control apparatus configured to control the display apparatus, and when one object is selected on the remote control apparatus, selecting the selected object as the search target.

The search method of the display apparatus according to the second embodiment may further include receiving information for search category determined on the remote control apparatus and extracting keyword information related to the search category from the metadata of the content using the received information for the search category.

When the object is selected as the search target, the display apparatus transmits the object selected as the search target to the search server (S1040) and receives and displays a search result (S1050). When the keyword information is extracted, the display apparatus may transmit the selected object, together with the keyword information, to the search server and receive and display a searching data corresponding thereto from the search server.

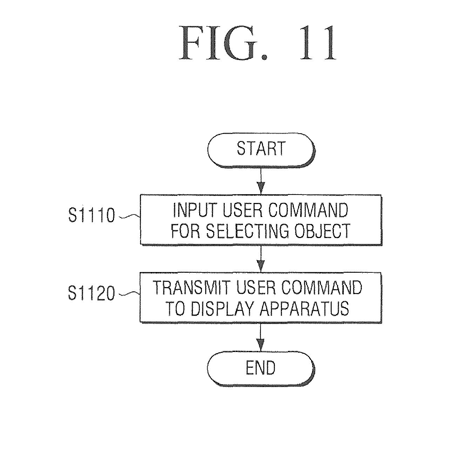

FIG. 11 is a flowchart illustrating a search server of a remote control apparatus according to an exemplary embodiment.

Referring to FIG. 11, a remote control apparatus receives a user command for selecting an object (S1110). Specifically, the remote control apparatus receives the user command for selecting an object in an image frame being displayed in a display apparatus. Then, the remote control apparatus transmits the user command to the display apparatus (S1120). In other words, the remote control apparatus transmits the user commend to the display apparatus to display a searching result for the selected object.

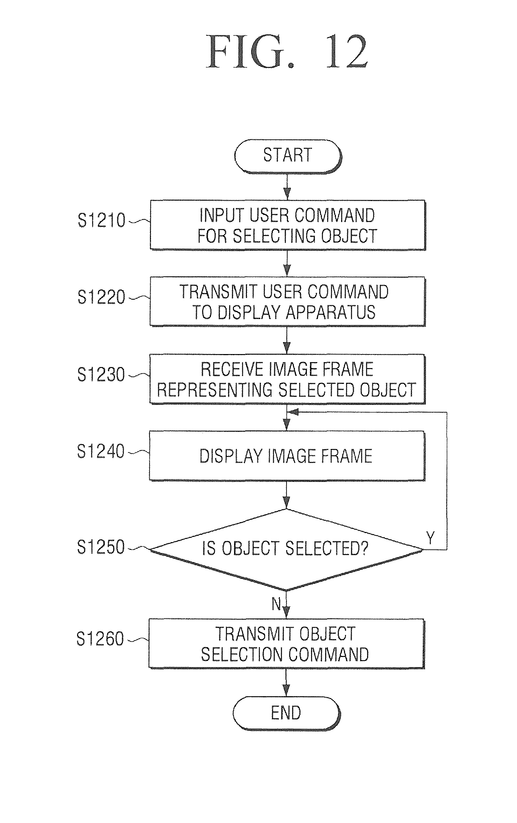

FIG. 12 is a flowchart illustrating a searching method of a remote control apparatus according to another exemplary embodiment.

Referring to FIG. 12, the remote control apparatus receives a user command for selecting an object (S1210). Then, the remote control apparatus transmits the user command to a display apparatus (S1220). Then, the remote control apparatus receives an image frame representing detected objects (S1230). Specifically, the remote control apparatus receives an image frame which is captured at a point of time when the user command is transmitted and represents the objects detected according to the user command. Then, the remote control apparatus displays the received image frame (S1240).

When one of the objects represented on the displayed image frame (1250-Y), the remote control apparatus transmits an object selection command to the display apparatus (S1260). The objects may be selected according to a selection command of the user.

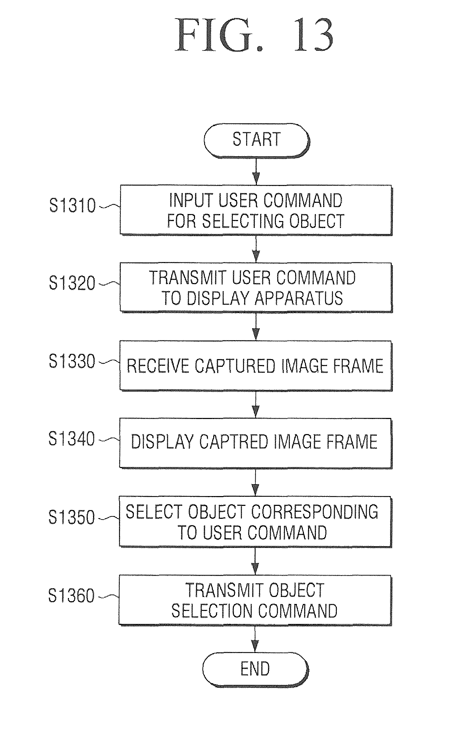

FIG. 13 is a flowchart illustrating a searching method of a remote control apparatus according to another exemplary embodiment.

Referring to FIG. 13, a remote control apparatus receives a user command for selecting an object (S1310). The remote control apparatus transmits the user command to a display apparatus (S1320). Then, the remote control apparatus receives a captured image frame (S1330). In other words, the remote control apparatus receives a captured image frame at a point of time when the user command is transmitted. The remote control apparatus displays the captured image frame (S1340) and selects an object corresponding to the user command in the received image frame (S1350).

The selecting an object (S1350) may include determining a search category corresponding to the set command, detecting objects belonging to the search category in the received image frame, and selecting one of the detected objects. The selecting one of the detected objects may be performed according to a selection command of a user.

When the user command is a touch input of a preset pattern, the determining a search category may include analyzing the pattern of the touch input and determining the search category corresponding to the pattern of the touch input.

Then, the remote control apparatus may transmit an object selection command for selecting the selected object as the search target to the display apparatus (S1360).

The methods according to the above-described various exemplary embodiments may be recorded in various types of recording media and used.

Specifically, a program code for executing the methods may be stored in various types of nonvolatile recording media, i.e., a flash memory, a read only memory (ROM), an erasable programmable ROM (EPROM), an electronically erasable and programmable ROM (EEPROM), a hard disc, a removable disc, a memory card, a USB memory, a compact disc ROM (CD-ROM).

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A searching method of a display apparatus, the method comprising:
displaying an image frame of a content;
selecting an object, corresponding to a user command for selecting the object in the image frame as a search target, in response to the received user command;
transmitting the selected object as the search target to a search server; and
receiving and displaying a searching result for the selected object from the search server.

2. The method as claimed in claim 1, wherein the selecting the object as the search target includes:
capturing the image frame of the content being displayed, at a point of time when the user command is received, among a plurality of image frames of the content;
determining a search category corresponding to the user command; and
detecting a plurality of objects belonging to the determined search category in the captured image frame and selecting the object as the search target.

3. The method as claimed in claim 2,
wherein the user command is a touch input of a preset pattern, and
wherein the determining the search category includes analyzing the pattern of the touch input and determining the search category corresponding to the pattern of the touch input.

4. The method as claimed in claim 2 or 3, wherein the detecting the plurality of objects and selecting the object as the search target includes:
transmitting an image frame representing the detected objects to a remote control apparatus,
which controls the display apparatus; and
selecting the selected object as the search target in response to a selection of one of the detected objects on the remote control apparatus.

5. The method as claimed in any of claims 2 to 4, further comprising extracting keyword information related to a search category from metadata of the content,
wherein the transmitting the selected object as the search target to the search server includes transmitting the selected object as the search target and the extracted keyword information to the search server.

6. The method as claimed in claim 1, wherein the transmitting the selected object as the search target includes:
capturing the image frame of the content which is being displayed, at a point of time when the user command is received, among a plurality of image frames of the content;
transmitting the captured image frame to a remote control apparatus, which controls the display apparatus; and
selecting the selected object as the search target in response to a selection of the object by the remote control apparatus.

7. The method as claimed in claim 6, further comprising:
receiving information for a search category determined on the remote control apparatus; and
extracting keyword information related to the received category from metadata of the content using information for the received search category,
wherein the transmitting the selected object as the search target to the search server includes transmitting the selected object as the search target and the extracted keyword information to the search server.

8. A search method of a remote control apparatus which controls a display apparatus, the method comprising:
receiving a user command for selecting an object in an image frame being displaying in the display apparatus; and
transmitting the user command to the display apparatus to display a searching result for the selected object.

9. The method as claimed in claim 8, further comprising:
receiving an image frame representing objects detected according to the user command,
which is captured at a point of time when the user command is transmitted, from the display apparatus;
displaying the received image frame; and
transmitting an object selection command for selecting the selected object as a search target to the display apparatus, in response to a selection of one of the objects represented on the display image frame.

10. The method as claimed in claim 8, further comprising:
receiving an image frame captured at a point of time when the user command is transmitted;
displaying the captured image frame;
selecting an object in the received image frame corresponding to the user command; and
transmitting an object selection command for selecting the selected object as the search target to the display apparatus.

11. The method as claimed in claim 10, wherein the selecting the selected object includes:
determining a search category corresponding to the user command;
detecting a plurality of objects belonging to the determined search category in the displayed image frame; and
selecting one of the detected objects.

12. The method as claimed in claim 11,
wherein the user command is a touch input of a preset pattern, and
wherein the determining the search category includes analyzing the pattern of the touch input and determining the search category corresponding to the pattern of the touch input.

13. A display apparatus, comprising:
a display unit configured to display an image frame of a content;
an interface unit configured to receive a user command for selecting an object;
a selection unit configured to select the object corresponding to the user command as a search target, in a plurality of image frames of the content;
a communication unit configured to communicate with an external search server; and
a control unit configured to transmit the selected object as the search target to the external search server, receive a searching result for the selected object from the external search server, and display the searching result.

14. The display apparatus as claimed in claim 13, wherein the selection unit includes:
a capture unit configured to capture the image frame of the content being displayed, at a point of time when the user command is received, among the image frames of the content;
a category determination unit configured to a search category corresponding to the user command; and
an object selection unit configured to detect a plurality of objects belonging to the determined search category in the captured image frame and select the object as the search target.

15. A remote control apparatus which controls a display apparatus, the remote control apparatus comprising:
an input unit configured to receive a user command for selecting an object in an image frame being displayed in the display apparatus;
an interface unit configured to communicate with the display apparatus; and
a control unit configured to control the interface unit to transmit the user command to the display apparatus, thereby displaying a searching result for the selected object.
